**Europäisches Patentamt**

**European Patent Office**

**Office européen des brevets**

(19)

(11) Numéro de publication : **0 450 243 B1**

# (12) FASCICULE DE BREVET EUROPEEN

(45) Date de publication du fascicule du brevet :
**29.12.93 Bulletin 93/52**

(51) Int. Cl.$^5$ : **G01B 7/00,** F41G 3/22,
G01V 13/00

(21) Numéro de dépôt : **90403349.5**

(22) Date de dépôt : **27.11.90**

(54) **Détecteur électromagnétique de position et d'orientation.**

(30) Priorité : **01.12.89 FR 8915881**

(43) Date de publication de la demande :
**09.10.91 Bulletin 91/41**

(45) Mention de la délivrance du brevet :
**29.12.93 Bulletin 93/52**

(84) Etats contractants désignés :
**BE CH DE FR GB IT LI NL SE**

(56) Documents cités :
**EP-A- 0 021 906**
**EP-A- 0 058 412**
**GB-A- 2 125 168**
**GB-A- 2 197 078**
**US-A- 4 054 881**
**US-A- 4 737 794**

(73) Titulaire : **SEXTANT AVIONIQUE**
**5,7, rue Jeanne Braconnier Parc Tertiaire**
**F-92360 Meudon-la-Forêt (FR)**

(72) Inventeur : **Cantaloube, Christian**
**THOMSON-CSF SCPI Cédex 67**
**F-92045 Paris la Défense (FR)**

(74) Mandataire : **Courtellemont, Alain et al**
**THOMSON-CSF, SCPI, B.P. 329, 50, rue**
**Jean-Pierre Timbaud**
**F-92402 Courbevoie Cédex (FR)**

Jouve, 18, rue Saint-Denis, 75001 PARIS

# Description

La présente invention concerne un détecteur électromagnétique conçu pour repérer la position et l'orientation d'un corps mobile dans un espace donné et notamment pour repérer la position exacte, dans un avion, du casque, équipé d'un viseur de casque, que porte le pilote.

Un détecteur électromagnétique de position et d'orientation comporte généralement un émetteur fixe à trois bobines excitées alternativement par un générateur et un capteur mobile à trois bobines, pour fournir, par chacune de ses bobines, un signal induit relatif à l'excitation de chacune des bobines de l'émetteur ; des moyens de calcul couplés aux bobines du capteur permettent de déterminer, en fonction des signaux induits, la position et l'orientation du capteur. Dans le cas du repérage de la position du casque dans un avion, la carlingue de l'avion constitue l'espace donné et le casque le corps mobile.

De tels détecteurs sont décrits, par exemple dans les brevets français 2 458 838 et US 4 396 885. Pour déterminer la position et l'orientation d'un corps mobile dans un espace, l'émetteur occupe une place fixe dans l'espace et le capteur est fixé au corps mobile. A chaque position du corps correspondent, pour chaque bobine du capteur, trois signaux qui sont induits respectivement par les trois bobines de l'émetteur ; au total ce sont neuf signaux induits qui servent à calculer la position et la direction du corps.

Ce calcul est entaché d'erreurs dues aux imperfections des voies qui vont du générateur électrique d'excitation aux moyens de calcul ; en effet ces voies présentent des imperfections de gain tant en émission qu'en réception : imprécisions, non-linéarités, dérives.

Par le brevet US 4 054 881 il est également connu de réaliser un détecteur électromagnétique de position et d'orientation avec, en plus du capteur mobile, une antenne fixe dont le signal induit sert à réaliser une contre-réaction dans les voies d'émission pour maintenir constant le niveau du champ électromagnétique créé par l'émetteur. Un tel dispositif peut éliminer les erreurs des voies d'émission mais est sans effet sur les erreurs dues aux imperfections de gain qui affectent les éléments situés depuis le capteur compris jusqu'aux moyens de calcul non compris.

Le but de la présente invention est d'éviter ou pour le moins de réduire les inconvénients de ces détecteurs.

La présente invention a pour objet un capteur fixe dont le signal sert de signal de référence pour, lors des calculs, corriger les erreurs amenées sur les neuf signaux induits, tel que défini par la revendication 1.

D'autres objets et d'autres caractéristiques apparaîtront à l'aide de la description ci-après et des figures s'y rapportant, qui représentent :
- la figure 1, un schéma d'un détecteur selon l'invention,
- la figure 2, un schéma d'un autre détecteur selon l'invention.

Sur les différentes figures les éléments correspondants sont désignés par les mêmes symboles.

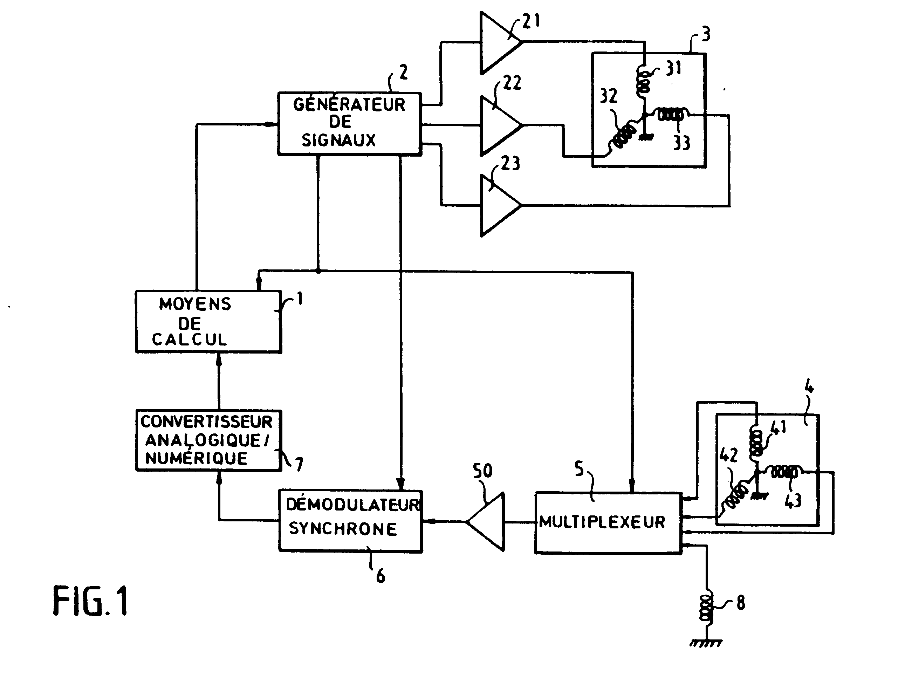

Le détecteur électromagnétique de position et d'orientation selon l'invention est réalisé à partir d'un détecteur connu ; le fonctionnement d'un tel détecteur est rappelé ci-après, avec l'aide de la figure 1, mais sans tenir compte pour l'instant de l'élément 8 qui est spécifique à l'invention.

Les détecteurs de position et d'orientation d'un solide dans un espace, utilisant un couplage électromagnétique entre un émetteur fixe et un capteur mobile sont principalement constitués par :
- un générateur de signaux électriques 2, pour délivrer des signaux d'excitation et un signal de partition
- un émetteur fixe 3, pour recevoir par trois amplificateurs 21, 22, 23, le signal du générateur 2 et générer dans l'espace, de façon identifiable, trois vecteurs champ magnétique indépendants $\overrightarrow{B1}$, $\overrightarrow{B2}$, $\overrightarrow{B3}$ ; le terme indépendant signifie ici que les directions des champs sont distinctes et que les champs ne sont pas tous les trois contenus dans un même plan
- un capteur mobile 4, placé en un point de l'espace et qui reçoit suivant trois axes indépendants les trois champs créés par l'émetteur,
- un dispositif de traitement des trois composantes de champ induites par chacun des trois vecteurs champ magnétique dans le capteur 4 ; il y a donc neuf composantes à traiter pour déterminer la position et l'orientation du capteur à un instant donné.

L'émetteur 3 et le capteur 4 sont le plus souvent réalisés à l'aide de triplets 31, 32, 33 et 41, 42, 43 de bobines orthogonales entre elles, disposées selon les axes, non représentés d'un trièdre de référence.

Le dispositif de traitement comporte, le plus généralement, en série à partir des sorties du capteur 4 : un multiplexeur, 5, un amplificateur, 50, un démodulateur synchrone, 6, un convertisseur analogique-numérique, 7 et des moyens de calcul, 1, formés à partir d'un microprocesseur. Les moyens de calcul déclenchent le générateur de signal 2 qui fournit un signal d'excitation pour alimenter l'une après l'autre et séparément les bobines 31, 32, 33 de l'émetteur, au cours de cycles d'alimentation successifs. Un signal de partition de cycle, formé d'une impulsion de début de cycle suivie de neuf impulsions régulièrement réparties dans la durée d'un cycle, est fourni par le générateur 2 sur une entrée de commande du multiplexeur 5 ; ce dernier peut ainsi connecter séparément et successivement les trois bobines 41, 42, 43 du capteur 4, à l'entrée de l'amplificateur 50 pendant le temps, où une bobine de l'émetteur est alimentée au cours d'un cycle ; pendant un cycle le multiplexeur 5 délivre ainsi neuf signaux correspondant aux signaux induits successivement par les trois bobines de l'émetteur 3 dans chacune des trois bobines du capteur 4.

Le démodulateur synchrone 6 effectue une démodulation des signaux fournis par l'amplificateur 50, grâce au signal d'excitation que lui délivre en permanence, dès qu'il est déclenché, le générateur 2. Le signal de partition est également fourni aux moyens de calcul 1 pour leur permettre de reconnaître la provenance des signaux qui leur arrivent à travers le convertisseur 7.

Il existe deux méthodes principales d'obtention de la position et de l'orientation du capteur par rapport à l'émetteur.

La première méthode utilise les lois de l'électromagnétisme qui donnent des formules de prédiction des champs créés en tous points.

Les valeurs caractéristiques $\vec{B1}.\vec{B2}$, $\vec{B1}.\vec{B3}$, $\vec{B2}.\vec{B3}$, $\vec{B1}.\vec{B1}$, $\vec{B2}.\vec{B2}$, $\vec{B3}.\vec{B3}$, qui ne dépendent pas de la rotation du capteur mais uniquement de sa position, sont calculées à partir des neuf mesures de champ effectuées dans le repère que constitue le capteur. Grâce à ces six paramètres et aux lois de l'électromagnétisme, la position du capteur par rapport à l'émetteur est calculée.

Connaissant cette position, les neuf composantes des champs sont calculées dans le repère de l'émetteur. La comparaison de ces neuf composantes à celles vues par le capteur donne la rotation relative du capteur par rapport à l'émetteur.

La seconde méthode utilise un relevé expérimental préalable des champs dans l'espace, avec un capteur ayant une orientation définie, ce qui permet de s'affranchir des distorsions dues soit aux masses métalliques présentes à proximité, soit aux imperfections des émetteur et capteur par rapport à la théorie électromagnétique.

Dans les deux méthodes, la précision des chaînes d'émission, de réception et de mesure influe directement sur la précision des valeurs obtenues pour la position et l'orientation.

Les détecteurs décrits ci-après permettent de s'affranchir de cet inconvénient et peuvent être utilisés avec l'une ou l'autre des deux méthodes d'extraction de position et d'orientation précédemment citées. Ils nécessitent simplement que les différences de constitution entre les bobines du récepteur et la bobine de référence soient négligeables ou soient mesurées et connues par ailleurs.

Le détecteur, tel qu'il est dessiné sur la figure 1, se distingue d'un détecteur classique par l'adjonction d'un capteur fixe 8 réalisé à l'aide d'une bobine dont la position et l'orientation sont connues avec précision dans le trièdre de référence de l'émetteur 3.

La bobine du capteur fixe 8 est traitée de la même façon que les bobines 41, 42, 43 du capteur mobile 4, c'est-à-dire que son signal induit est fourni au multiplexeur 5. Le multiplexeur 5 comporte donc une entrée de signal de plus que le multiplexeur correspondant d'un détecteur classique ; le signal de partition qu'il reçoit du générateur de signaux 2 est alors formé d'une impulsion de début de cycle suivie, non pas de neuf, mais de douze impulsions régulièrement réparties dans la durée d'un cycle, puisque chaque fois qu'une des trois bobines de l'émetteur 3 est excitée, les signaux induits dans les quatre bobines de capteurs doivent être successivement prises en compte.

La mesure du signal induit dans le capteur fixe 8, comparée à la valeur théorique que devrait avoir ce signal du fait de sa position et de son orientation dans la première méthode de détermination de la position et de l'orientation décrite ci-avant, ou comparée à la valeur du signal induit dans le capteur 8 pendant le relevé expérimental des champs dans la seconde méthode décrite ci-avant, permet de corriger, dans les neuf mesures faites par cycle avec capteur mobile, les erreurs dues aux chaînes d'émission, de réception et de mesure ; la façon de procéder pour effectuer ces corrections est décrite ci-après, en considérant deux cas.

Le premier cas est celui où le détecteur selon la figure 1 est linéaire aussi bien dans ses trois voies d'émission que dans sa voie de mesure et où, au moment de la mesure, la voie de réception présente une erreur de gain Gr et chaque voie d'émission une erreur de gain Gej, où j est la référence de la bobine d'émetteur de la voie considérée diminuée de 30. Pour simplifier, dans ce qui suit, les bobines j = 1, 2 et 3 seront respectivement les bobines 31, 32, 33 de l'émetteur 3 tandis que les bobines i = 1, 2 et 3 seront respectivement les bobines 41, 42 et 43 du capteur mobile 4.

Chaque calcul du couplage magnétique Mij entre la bobine de la voie j à l'émission et la bobine i = 1, 2 ou 3 du capteur 4, est donc entaché d'une erreur globale de gain Gej.Gr. Or le calcul du couplage M4j entre la quatrième bobine, c'est-à-dire celle du capteur fixe 8, et la bobine de la voie j est entachée de la même erreur Gej.Gr. Ces couplages magnétiques calculés peuvent donc s'écrire :

$$Mij = Gej.Gr. M'ij$$
$$M4j = Gej.Gr. M'4j$$

dans ces formules M'ij et M'4j sont les valeurs vraies des couplages magnétiques considérés. Ainsi la vraie valeur à prendre en compte, dans les calculs, pour déterminer la position et l'orientation du capteur mobile 4, s'écrit

$$M'ij = Mij.M'4j/M4j$$

M'ij peut donc être calculé puisque Mij et M4j sont calculés et que, dans la première méthode de détermination exposée ci-avant, M'4j sera la valeur théorique du couplage calculée pour le capteur 8, tandis que, dans la seconde méthode, ce sera la valeur relevée lors de la mesure expérimentale des champs.

Le second cas à considérer est celui où le détecteur n'est pas linéaire dans ses voies d'émission et de mesure. Dans ce cas si ej est le niveau commandé sur la bobine j de l'émetteur, le niveau réel d'émission est e'j = fj(ej) où fj est une fonction. De même si ri est le niveau réellement reçu sur la bobine i du capteur 8, le niveau de réception, tel qu'il est vu c'est-à-dire tel qu'il sera pris en compte dans les calculs, peut s'écrire r'i = g(ri) où g est une fonction.

En prenant comme modèles des fonctions fj et g les polynômes

$$e'j = bj.ej + cj.ej^2 + ....$$

et

$$r' : a + b.r + c.r^2 + ....$$

et en y introduisant ri = Mij. e'j
il vient

$$r'i = a + b.bj.Mij.ej + b.cj.Mij.ej^2 +$$
$$c.Mij^2.(bj^2.ej^2 + cj^2.ej^4 + 2\ bj.cj.ej^3) + ....$$

dans cette formule il apparaît que le coefficient d'ordre 1 de la fonction r'i = hij(ej) et qui sera appelé Kij, est homogène à l'erreur de gain Gej.Gr dans le cas où le détecteur est linéaire :

$$kij = b.bj.Mij$$

de ce fait le détecteur est utilisé comme indiqué ci-après.

Par des émissions successives à des niveaux différents ej, les coefficients d'ordre 1 des fonctions hij et h4j, c'est-à-dire kij et k4j, sont déterminés.

Dans le cas d'un traitement selon la première méthode, la connaissance de M4j permet de déterminer l'erreur de gain b.bj :

$$b.bj = k4j/M4j$$

et

$$Mij = kij/b.bj = kij.M4j/k4j$$

Dans le cas d'un traitement par relevé expérimental du champ, k'4j relevé initialement et comparé à la valeur k4j mesurée en exploitation permet de retrouver l'erreur relative entre les deux séries de mesures, d'où :

$$Mij = kij.k'4j/k4j$$

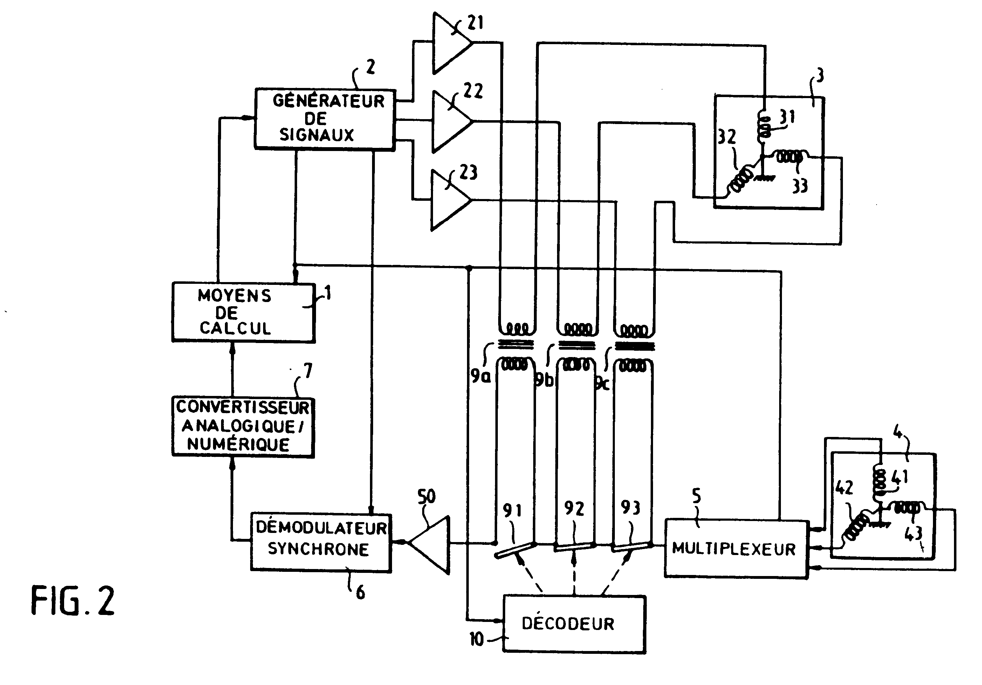

La figure 2 est un schéma d'un détecteur selon l'invention dans lequel la référence de mesure, au lieu d'être donnée par un capteur fixe en champ libre tel que le capteur 8 de la figure 1, est donnée par trois transformateurs 9a, 9b, 9c ; les enroulements primaires de ces transformateurs sont montés en série avec les bobines d'un émetteur 3 semblable à celui de la figure 1, par exemple l'enroulement primaire du transformateur 9a avec la bobine 31 ; les enroulements secondaires de ces transformateurs sont montés en série entre la sortie d'un multiplexeur 5 et l'entrée d'un amplificateur 50 ; ces deux circuits sont semblables aux circuits 5 et 50 de la figure 1 à la différence près que le multiplexeur ne nécessite plus que trois entrées de signaux. Des interrupteurs 91, 92, 93 sont montés en parallèle respectivement sur les enroulements secondaires de ces transformateurs et sont commandés à l'aide du signal de partition dont il a déjà été question lors de la description de la figure 1. Pour le reste du circuit la figure 2 est identique à la figure 1.

Dans le montage selon la figure 2 le signal de partition est formé d'une impulsion de début de cycle suivie non plus de douze mais de dix-huit impulsions régulièrement réparties dans la durée du cycle ; dans ces dix huit impulsions successives, les impulsions de rang impair sont utilisées, par le multiplexeur 5, comme dans le cas d'un détecteur classique ne comportant pas d'autre couplage électromagnétique que celui entre l'émetteur 3 et le capteur mobile 4, c'est-à-dire qu'elles servent au multiplexage dans le temps des signaux induits dans chacune des bobines du capteur mobile 4 par chacune des bobines de l'émetteur 3 ; quant aux neuf impulsions de rang pair, elles sont utilisées par un décodeur 10 pour commander l'ouverture d'un et d'un seul des interrupteurs 9a, 9b, 9c ; cette ouverture d'un interrupteur a lieu pendant la moitié de la durée de prise en compte de chacun des trois signaux induits créés par le signal d'excitation appliqué à la bobine de l'émetteur 3 qui est en série avec le primaire du transformateur sur le secondaire duquel l'interrupteur considéré est monté.

Les coefficients de couplage supplémentaires Kj, avec j = 1, 2 et 3, amenés respectivement par les transformateurs 9a, 9b, 9c, permettent d'éliminer l'erreur de gain et de déterminer ainsi la vraie valeur M'ij du couplage magnétique entre la bobine j de l'émetteur et la bobine i du capteur, i et j ayant les mêmes significations que dans les explications relatives à la figure 1. En utilisant les mêmes références que celles utilisées lors des calculs relatifs à la figure 1, il vient en effet, lors de la mesure avec transformateur

$$ri1 = (Kj + M'ij)\ Gej.Gr.ej$$

et sans transformateur

$$ri2 = M'ij.Gej.Gr.ej$$

d'où

$$ri1 - ri2 = Kj.Gej.Gr.ej$$
$$Gej.Gr.ej = (ri1 - ri2)/Kj$$

ce qui donne

$$M'ij = Kj.ri2/ (ri1 - ri2)$$

ainsi, Kj étant connu et ri1, ri2 étant obtenus par le calcul, la vraie valeur M'ij du coefficient de couplage entre la bobine j de l'émetteur 3 et la bobine i du capteur 4 peut être calculée par les moyens de calcul 1.

La présente invention n'est pas limitée aux exemples décrits c'est ainsi, en particulier, que le montage selon la figure 2 peut être modifié en disposant les secondaires des transformateurs 9a, 9b, 9c non pas en série sur la sortie du multiplexeur 5 mais en les branchant chacun sur une entrée d'un multiplexeur 5 qui comporterait six entrées de signaux. Le signal de partition devrait alors comporter, par cycle, une impulsion de début de cycle et douze impulsions régulièrement réparties dans la durée du cycle de manière que, pendant que l'une des bobines de l'émetteur 3 reçoit le signal d'excitation du générateur 2, soient pris en compte successivement les signaux induits dans les trois bobines du capteur mobile 4 et dans le secondaire du transformateur dont le primaire reçoit le signal d'excitation, c'est-à-dire dont le primaire est en série avec celle des bobines de l'émetteur qui est excitée.

## Revendications

1. Détecteur électro-magnétique de position et d'orientation comportant un générateur électrique d'excitation (2), un émetteur fixe (3) à trois bobines (31, 32, 33) excitées alternativement par le générateur, un capteur mobile (4) à trois bobines (41, 42, 43), pour fournir par chacune de ses bobines un signal induit relatif à l'excitation de chacune des bobines de l'émetteur et des moyens de calcul (1) couplés aux bobines du capteur pour déterminer, en fonction des signaux induits, la position et l'orientation du capteur, caractérisé en ce que, pour tenir compte de l'imprécision des gains sur les signaux entre le générateur (2) et les moyens de calcul (1), il comporte un capteur fixe (8, 9a, 9b, 9c, 91, 92, 93) disposé dans une liaison avec couplage électromagnétique entre le générateur électrique et les moyens de calcul, pour fournir aux moyens de calcul un signal de référence afin de corriger les calculs effectués à partir des signaux induits.

2. Détecteur selon la revendication 1, caractérisé en ce que le capteur fixe est constitué par une bobine (8) pour fournir un signal induit relatif à l'excitation de chacune des bobines de l'émetteur (3), ce signal étant envoyé par la liaison aux moyens de calcul (1) pour servir de signal de référence.

3. Détecteur selon la revendication 1, caractérisé en ce que le capteur fixe est constitué par trois transformateurs (9a, 9b, 9c) dont les enroulements primaires sont en série respectivement avec les trois bobines de l'émetteur (3) et dont les enroulements secondaires sont en série dans le couplage entre les trois bobines du capteur mobile et les moyens de calcul, et par trois interrupteurs (91, 92, 93) en parallèle respectivement sur les trois enroulements secondaires, chaque interrupteur étant destiné à être fermé pour court-circuiter l'enroulement sur lequel il est en parallèle, pendant une partie du temps où la bobine en série avec cet enroulement fournit le signal induit relatif à l'excitation de chacune des bobines de l'émetteur, chaque enroulement secondaire fournissant ainsi, pendant le temps où l'interrupteur en parallèle sur lui est ouvert, un signal de couplage qui sert de signal de référence.

## Patentansprüche

1. Elektromagnetischer Positions- und Orientierungsdetektor mit einem elektrischen Anregungsgenerator (2), einem festen Sender (3) mit drei Spulen (31, 32, 33), die abwechselnd von dem Generator erregt werden, einem beweglichen Fühler (4) mit drei Spulen (41, 42, 43) zur Lieferung eines relativ zur Erregung jeder der Spulen des Senders induzierten Signals durch jede dieser Spulen und an die Spulen des Fühlers angeschlossene Berechnungsmittel (1), die abhängig von den induzierten Signalen die Position und die Orientierung des Fühlers bestimmen, dadurch gekennzeichnet, daß er zur Berucksichtigung der Ungenauigkeit der Verstärkungen an den Signalen zwischen den Generator (2) und den Berechnungsmitteln (1) einen festen Fühler (8, 9a, 9b, 9c, 91, 92, 93) enthält, der in einer Verbindung mit elektromagnetischer Kopplung zwischen dem elektrischen Generator und den Berechnungsmitteln angeordnet ist, um an die Berechnungsmittel ein Referenzsignal zum Korrigieren der an den induzierten Signalen durchgeführten Berechnungen zu liefern.

2. Detektor nach Anspruch 1, dadurch gekennzeichnet, daß der feste Fühler von einer Spule (8) zur Abgabe eines induzierten Signals bezüglich Anregung jeder der Spulen des Senders (3) gebildet ist, wobei dieses Signal über die Verbindung zu den Berechnungsmitteln (1) übertragen wird, um als Referenzsignal zu dienen.

3. Detektor nach Anspruch 1, dadurch gekennzeichnet, daß der feste Fühler gebildet ist von drei Transformatoren (9a, 9b, 9c), deren Primärwicklungen jeweils in Serie mit den drei Spulen des Senders (3) liegen und deren Sekundärwicklungen in Serie in der Kopplung zwischen den drei Spulen des beweglichen Fühlers und den Berechnungsmitteln liegen, und von drei Schaltern (91, 92, 93), die jeweils parallel zu den drei Sekundärwicklungen liegen, wobei jeder Schalter dazu bestimmt ist, während eines Abschnitts der Zeit, in der die mit dieser Wicklung in Serie liegende Spule das induzierte Signal bezüglich der Anregung jeder der Spulen des Senders liefert, zum Kurzschließen der Wicklung, zu der er parallel liegt, geschlossen zu werden, wobei jede Sekundärwicklung auf diese Weise während der Zeit, in der der zu ihr parallel liegende Schalter offen ist, ein Kopplungssignal liefert, das als Referenzsignal dient.

## Claims

1. Electromagnetic position and orientation detector including an electrical energizing generator (2), a fixed transmitter (3) with three coils (31, 32, 33) energized alternately by the generator, a moving sensor (4) with three coils (41, 42, 43), for providing, via each of its coils, an induced signal relating to the energizing of each of the coils of the transmitter and calculating means (1) coupled to the coils of the sensor in order to determine, as a function of the induced signals, the position and orientation of the sensor, characterized in that, in order to take into account the imprecision of the gains in the signals between the generator (2) and the calculating means (1), it includes a fixed sensor (8, 9a, 9b, 9c, 91, 92, 93) arranged in a link with electromagnetic coupling between the electrical generator and the calculating means, in order to provide the calculating means with a reference signal so as to correct the calculations performed from the induced signals.

2. Detector according to Claim 1, characterized in that the fixed sensor consists of a coil (8) in order to provide an induced signal relating to the energizing of each of the coils of the transmitter (3), this signal being sent via the link to the calculating means (1) in order to serve as reference signal.

3. Detector according to Claim 1, characterized in that the fixed sensor consists of three transformers (9a, 9b, 9c) whose primary windings are in series respectively with the three coils of the transmitter (3) and whose secondary windings are in series in the coupling between the three coils of the moving sensor and the calculating means, and of three interrupters (91, 92, 93) in parallel with the three secondary windings respectively, each interrupter being intended to be closed in order to short-circuit the winding with which it is in parallel, during a part of the time for which the coil in series with this winding provides the induced signal relating to the energizing of each of the coils of the transmitter, each secondary winding thus providing, during the time for which the interrupter in parallel with it is open, a coupling signal which serves as reference signal.

FIG.1

FIG.2

EP 0 450 243 B1

GÉNÉRATEUR DE SIGNAUX — 2

21
22
23

3
31
32
33

MOYENS DE CALCUL — 1

CONVERTISSEUR ANALOGIQUE / NUMÉRIQUE — 7

DÉMODULATEUR SYNCHRONE

6

50

9a 9b 9c

91 92 93

DÉCODEUR

10

MULTIPLEXEUR — 5

4
41
42
43